# EUROPEAN PATENT SPECIFICATION

(11) **EP 0 410 675 B1**
(45) Date of publication and mention of the grant of the patent: **01.12.1993**
(21) Application number: 90308056.2
(22) Date of filing: 24.07.1990
(51) Int. Cl.: B60G 21/05, B60G 21/02

(54) **Vehicle suspensions systems**
Fahrzeugaufhängungsanlage
Systèmes de suspension de véhicule

(30) Priority: 25.07.1989 US 384758
(43) Date of publication of application: 30.01.1991
(73) Proprietor: Kopieczek, Anthony Mark Josef, Lafayette, Louisiana 70503 (US)
(72) Inventor: Kopieczek, Anthony Mark Josef, Lafayette, Louisiana 70503 (US)
(74) Representative: Jennings, Nigel Robin

(56) References cited:
- EP-A- 0 094 295
- DE-B- 1 165 425
- DE-B- 1 231 578
- DE-B- 1 236 952
- FR-A- 1 281 427
- FR-A- 1 382 104
- GB-A- 314 706
- US-A- 2 417 206
- US-A- 2 565 756
- US-A- 3 315 952
- PATENT ABSTRACTS OF JAPAN vol. 12, no. 445 (M-767)(3292) 22 November 1988,& JP-A-63 176713 (TOYOTA) 21 July 1988,

## Description

The invention relates to vehicle suspension systems and is concerned with that type of system which comprises a chassis, first and second wheel supports on opposite sides of the chassis for supporting respective wheels for vertical motion with respect to the chassis, a first torsion bar of generally U-shape which extends across the chassis and whose limbs are connected to a respective one of the wheel supports and a second torsion bar which extends across the chassis and whose ends are connected to a respective one of the wheel supports, the second torsion bar being divided into two portions which are connected together by a torque-reversing mechanism whereby a torque applied to one end produces a torque in the opposite sense at the other end.

It is known to construct an automotive suspension system such that it applies a resistive force to counteract the tendency of the vehicle body to roll, i.e. rotate about its longitudinal axis, when the vehicle deviates from a straight path. It is also known to apply such a resistive force through a medium which links the opposite wheels of one axle. For example, in a known roll or sway bar system, the resistive force is created by the use of a U-shaped bar whose limbs are connected to respective wheels and whose central portion is secured to the frame of the vehicle. Roll of the vehicle about its roll axis twists the roll bar and the reactive torque which is produced resists that roll. While a roll bar is used primarily to resist roll of the vehicle, it can also be used to help to locate the suspension components, as an auxiliary function. It is recognised in the field of suspension design that compromises have to be made regarding the stiffness of the U-shaped bar because a bar that is stiff enough to resist roll during hard cornering also results in the inside wheel becoming unloaded and sacrifices suspension independence.

It is also known to provide a bar in the shape of a "Z" for controlling the motion of the wheels of a vehicle. In this arrangement, such as that shown in US Patent No.3315952 (Vittone), the forwardly directed end of one limb of a "Z" bar is attached to one wheel, the rearward-directed end of the other limb is attached to the opposed wheel, and the central section is attached to the frame of the vehicle. In this arrangement, an upward force on the bar applied by one of the wheels causes a twisting of the central section of the bar which causes a downward force on the opposite wheel. Thus, a bar of this shape tends to keep the inside wheel on the ground as the vehicle body rolls when moving in a curve without providing resistance to roll motions as in the U-shaped bar described above.

The U-shaped roll bar and the Z-shaped bar thus operate in opposite senses and US-A-2565756 discloses a vehicle suspension system in which both types of bar are used. The suspension disclosed in this specification includes a U-shaped bar, the ends of whose limbs are connected to respective wheel supports on opposite sides of the vehicle and a separate Z-shaped bar whose limbs are also connected by complex pivotal mechanisms to the wheel supports. The use of two separate bars and of the complex pivotal mechanisms renders the suspension disclosed in this specification bulky, heavy and expensive.

DE-B-1236952 discloses a suspension system according to the preamble of claim 1 with a U-shaped bar and a bar divided into two portions which are connected by a torque-reversing mechanism.

DE-B-1165425 discloses a suspension system with a first shaped bar divided into two portions which are connected together by a torque-reversing mechanism. Situated coaxially within the first bar are two linear bars whose outer ends are connected to respective ends of the central limb of the first bar and whose inner ends are connected to the vehicle chassis.

It is the object of the present invention to propose a vehicle suspension system in which the effects of the U and Z-shaped bars are combined in a manner which is both simple and cheap and which occupies little or no more space than is normally required by a single bar.

According to the present invention a vehicle suspension system of the type referred to above is characterised in that the first torsion bar extends within and coaxially with the second torsion bar.

Thus the suspension system of the present invention has a U bar which functions as a roll bar and a further torsion bar which acts in the manner of a Z bar and thus counteracts the tendency of the U bar to unload the inside wheel of the vehicle under hard cornering. However, the bar which fulfils the function of the Z bar need not be of Z-shape and the torque-reversing function of this bar of this bar is fulfilled by a separate torque-reversing mechanism. The second torsion bar is divided into two portions between which the torque-reversing mechanism is positioned. The first torsion bar extends within the second torsion bar and this results in a particularly light, space-saving and simple but yet effective construction.

The torque-reversing mechanism may be of hydraulic type or of geared type or it may incorporate levers to reverse the directions of rotation of the two portions of the second torsion bar and thus the sense of the torque transmitted by the two portions of the second torsion bar.

The limbs of the U bar may be connected to the wheel supports, i.e. the wheel bearings, directly or indirectly in any convenient manner. The ends of the second torsion bar may also be connected directly or indirectly to the wheel supports and it is particularly simple and cheap if this connection is indirect via the limbs of the U bar. Thus in the preferred embodiment the first and second torsion bars are rotationally fixedly connected together at their ends, e.g. by way of cooperating splines which will prevent relative rotation but which will permit relative longitudinal movement, e.g. for disassembly or maintenance purposes.

Further features and details of the invention will be apparent from the following description of two specific embodiments which is given by way of example with reference to the accompanying diagrammatic drawings, in which:
Figure 1 is a perspective view of a first embodiment of a compound torsion suspension system in accordance with the invention;
Figure 2 is an exploded diagram of the torque-reversing mechanism used in the system shown in Figure 1;
Figure 3 is a perspective view of a second embodiment of a compound torsion suspension system in accordance with the invention; and
Figure 4 is a front view of the torque-reversing mechanism shown in Figure 3.

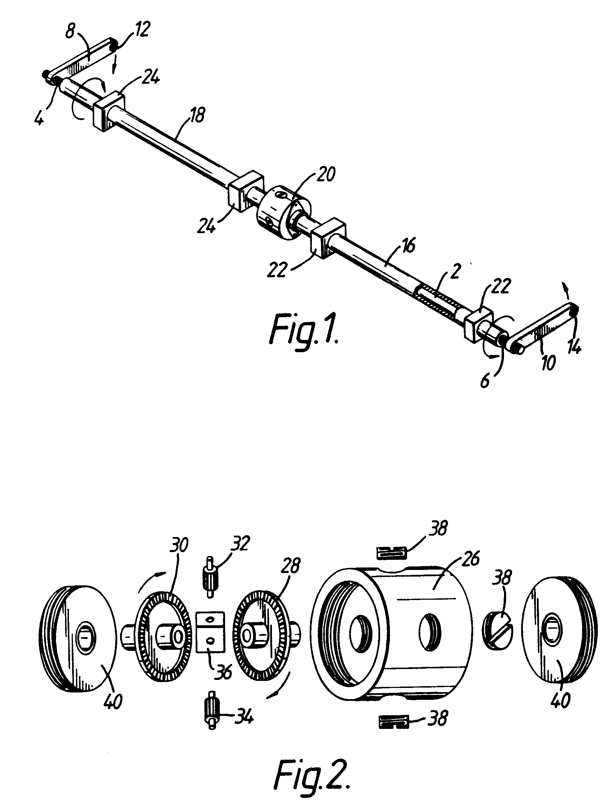

The compound torsion suspension system shown in Figure 1 comprises a first torsion bar 2 having opposite ends 4 and 6. Connectors 8 and 10 are attached to the ends 4,6 in this case by cooperating splines.

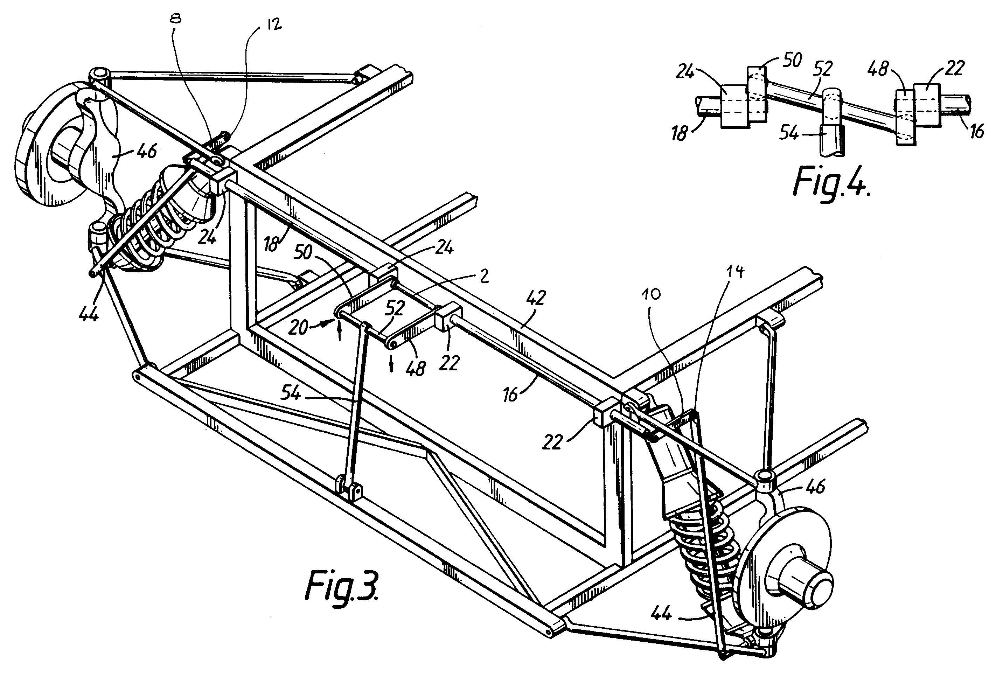

The ends of the connectors 8,10 are provided with sockets 12 and 14, respectively, adapted to receive links, which will be described in more detail with respect to Figure 3, for attaching the connectors to respective wheel suspension structures.

A second bar which is coaxial with and extends around the first bar 2, comprises first and second parts 16 and 18. The first part 16 is supported by pillow blocks 22 and connected to the end 6 of the first bar 2 and to a torque-reversing deivce 20 which produces an output torque opposite to that of the input torque. The second part 18 is connected to the end 4 of the first bar and to the device 20 and is supported by pillow blocks 24. The first and second parts of the second bar are connected to the ends 4 and 6 of the first bar by splines which cooperate with the splines on the first bar 2.

A torque applied to one of the connectors, such as connector 10, as a result of relative movement between the wheel of a vehicle and the chassis carrying the compound system shown in Figure 1 results in a torque being applied by the other of the connectors. The torque which results from the torque applied to the one of the connectors is a function of the torsional characteristics of the inner and outer bars. The inner bar acts like a roll bar of U shape such that an input torque in one direction results in an output torque in the same direction. The outer bar, however, acts in the manner of a Z-shaped bar to provide an output torque opposite to that of the input torque. If the bars have equal characteristics, the output torque provided by the outer bar will cancel the output torque of the inner bar. The resulting output torque can, however, be adjusted to provide an output torque which varies as a function of the input torque by providing the bars with different characteristics.

The outer bar operates in the manner of a Z bar in that it does not contribute to roll stiffness but does provide a force which tends to keep the inside wheel in contact with the ground as the vehicle is moving in a curved path. The inner bar is effectively a U bar and does provide roll stiffness but tends to lift the inside wheel from the ground as the vehicle moves in a curved path. Thus, if the characteristics of the outer bar are such that its output torque is larger than that provided by the inner bar, the inner bar can be designed to provide a significant amount of roll stiffness while the torque provided by the outer bar will maintain contact between the ground and the inside wheel. The outer bar thus corrects for a significant deficiency in the action of the inner bar and allows greater design flexibility in the roll stiffness of the inner bar.

For example, a 400 kg force applied to socket 14, will be transmitted through the inner and outer bars to socket 12. If the bars have equal torsional stiffness, the output torque will be zero, and the result will be that the spring stiffness of the wheel connected to the socket 14 will have been increased. If the torsional characteristics are different, however, the same 400 kg input at socket 14 may result in a downward force tending to maintain the associated wheel in contact with the ground.

Figure 2 shows one form of the torque-reversing device 20 in detail. A housing 26 defines a chamber for receiving a first crown gear 28, a second crown gear 30, a first connecting pinion gear 32, a second connecting pinion gear 34 and a bearing support block 36. Bearing plugs 38 are removably secured in the housing 26 for receiving the ends of the connecting gears 32 and 34. While only two connecting gears are shown, four such gears may be used. End bearing plates 40 support the gears 28 and 30. Secured to the exterior of the housing 26 are one or more anchorages (not shown) for securely fastening the device 20 to the vehicle chassis to maintain it stationary.

The inner end of the first part 16 of the outer bar is attached to gear 28, and the inner end of the second part 18 is attached to second gear 30. Gears 28 and 30 are supported between a respective one of the end plates 40 and block 36 such that the connecting gears 32 and 34 are held in engagement between the gears 28 and 30. The connecting gears 32 and 34 are supported between the block 36 and a respective one of the bearing plugs 38. Thus, an input torque applied by one of the parts 16 or 18 of the outer bar results, through the action of the gears 28 and 30 and the connecting gears 32 and 34, in an equal but opposite torque being applied to the other of the parts 16 or 18. Housing 26 is attached to the frame of the vehicle such that it remains stationary.

The first bar 2 passes unobstructed through the centre of the plates 40, gears 28 and 30, and block 36.

In a modified construction of the torque-reversing device, which is not illustrated, the torque is transmitted hydraulically between the two positions of the second torsion bar. The interior of the housing of this modified construction is divided into two portions filled with hydraulic fluid and connected by transfer ports which permit the flow of the fluid. The two halves of the second torsion bar are connected to respective impeller means, e.g. single vanes, within respective halves of the housing such that when one portion of the second torsion bar and thus the associated vane rotates in one direction, hydraulic fluid is displaced and causes the other vane and thus the other portion of the second torsion bar to rotate in the other direction.

The second embodiment shown in Figure 3 is similar to the first embodiment and the same reference numerals are used to designate similar components. In this case the bars 2 and 16,18 are shown secured to the chassis 42 of a motor vehicle by means of the pillow blocks 22,24 which permit rotation of the bars. In this case the chassis is in the form of a frame but it will be appreciated that it may also be of the known so-called "unibody construction". Various other components of the vehicle suspension system are also shown but these are known per se and will not be described. The sockets 12, 14 on the limbs or connectors 8,10 are connected by respective links 44 to the wheel supports 46.

However, the geared torque-reversing device 20 of Figures 1 and 2 is replaced by a torque-reversing mechanism 20 of pivotal lever type. The two portions 16,18 of the outer bar terminate at their inner ends with respective transverse arms 48,50 which extend parallel to one another and parallel to the normal direction of movement of the vehicle. A rod 52 connects the remote ends of the arms 48 and 50, and a pivotal support coupling 54 extends from a location on the frame 42 to the midpoint of the rod 52.

As shown in Figure 4, the connections between the rod 52 and the arms 48 and 50 and the pivotal support 54 comprise a ball and socket. When one part 16 or 18 of the outer bar has a torque applied to it in one direction, e.g. due to the fact that the vehicle or the associated wheel has hit an obstruction, the other part 18 or 16 applies a torque in the other direction due to the reversing action of the rod 52 and the pivotal support 54. It will be appreciated that the compound system shown in Figures 3 and 4 operates in the manner described with respect to the embodiment shown in Figures 1 and 2.

## Claims

1. A vehicle suspension system comprising a chassis (42), first and second wheel supports (46) on opposite sides of the chassis (42) for supporting respective wheels for vertical motion with respect to the chassis (42), a first torsion bar (2) of generally U-shape which extends across the chassis (42) and whose limbs (10) are connected to a respective one of the wheel supports and a second torsion bar (16,18) which extends across the chassis and whose ends are connected to a respective one of the wheel supports, the second torsion bar being divided into two portions (16,18) which are connected together by a torque-reversing mechanism (20) whereby a torque applied to one end produces a torque in the opposite sense at the other end, characterised in that the first torsion bar (2) extends within and coaxially with the second torsion bar (16,18).

2. A system as claimed in claim 1, characterised in that the torque-reversing mechanism (20) includes first and second gears (20,30) arranged to rotate with a respective portion (16,18) of the second torsion bar and one or more intermediate gears (32,34) connecting the first and second gears and arranged to cause them to rotate in opposite directions.

3. A system as claimed in claim 1, characterised in that the torque-reversing mechanism includes first and second impeller means arranged to rotate with a respective portion (16,18) of the second torsion bar and situated within respective portions of a housing which contains hydraulic fluid and is so arranged that rotation of one portion (16,18) of the torsion bar in one direction results in displacement of the hydraulic fluid and rotation of the other portion (18,16) of the torsion bar in the opposite direction.

4. A system as claimed in claim 2 or claim 3, characterised in that the first torsion bar extends through the torque-reversing mechanism (20).

5. A system as claimed in claim 1, characterised in that the torque-reversing mechanism (20) includes an arm (48,50) extending transversely from the inner end of each portion (16,18) of the second torsion bar, a rod (52) extending between the two arms (48,50) and pivotally connected to them and a coupling secured to the vehicle frame (42) and pivotally secured to the rod (52).

6. A system as claimed in any one of the preceding claims, characterised in that the first and second torsion bars (2;16,18) are rotationally fixedly connected together at their ends.

7. A system as claimed in claim 6, characterised in that the first torsion bar (2) carries external splines at its ends which cooperate with internal splines at the ends of the second torsion bar (16,18).

## Patentansprüche

1. Fahrzeugradaufhängungssystem, das umfaßt: ein Fahrgestell (42), eine erste und eine zweite Radstütze (46) auf entgegengesetzten Seiten des Fahrgestell (42) zur Abstützung der entsprechenden Räder für vertikale Bewegung in bezug auf das Fahrgestell (42), einen ersten Drehstab (2) von allgemeiner U-Form, der sich quer zum Fahrgestell (42) erstreckt und dessen Glieder (10) mit einem der entsprechenden Radstützen verbunden sind, und einen zweiten Drehstab (16, 18), der sich quer zum Fahrgestell erstreckt und dessen Enden mit einem der entsprechenden Radstützen verbunden sind, wobei der zweite Drehstab in zwei Teile (16, 18) geteilt ist, die durch einen Drehmoment-Umkehrmechanismus (20) verbunden sind, wodurch ein Drehmoment, das an einem Ende angelegt wird, ein Drehmoment im entgegengesetzten Sinne an dem anderen Ende erzeugt, dadurch gekennzeichnet, daß sich der erste Drehstab (2) innerhalb und koaxial zum zweiten Drehstab (16, 18) erstreckt.

2. System nach Anspruch 1, dadurch gekennzeichnet, daß der Drehmoment-Umkehrmechanismus (20) ein erstes und ein zweites Getriebe (20, 30) aufweist, die so angeordnet sind, daß sie mit einem entsprechenden Teil (16, 18) des zweiten Drehstabes rotieren, sowie ein oder mehrere Zwischengetriebe (32, 34) aufweist, die das erste und zweite Getriebe verbinden und so angeordnet sind, daß sie zum Drehen in entgegengesetzten Richtungen veranlaßt werden.

3. System nach Anspruch 1, dadurch gekennzeichnet, daß der Drehmoment-Umkehrmechanismus erste und zweite Laufradvorrichtungen aufweist, die so angeordnet sind, daß sie mit einem entsprechenden Teil (16, 18) des zweiten Drehstabes rotieren und innerhalb der entsprechenden Teile eines Gehäuses gelegen sind, das Hydraulikflüssigkeit enthält und so angeordnet ist, daß die Rotation eines Teiles (16, 18) des Drehstabes in einer Richtung eine Verdrängung der Hydraulikflüssigkeit und eine Rotation des anderen Teiles (18, 16) des Drehstabes in der entgegengesetzten Richtung ergibt.

4. System nach Anspruch 2 oder 3, dadurch gekennzeichnet, daß sich der erste Drehstab durch den Drehmoment-Umkehrmechanismus (20) erstreckt.

5. System nach Anspruch 1, dadurch gekennzeichnet, daß der Drehmoment-Umkehrmechanismus (20) einen Arm (48, 50) aufweist, der sich quer von dem inneren Ende eines jeden Teils (16, 18) des zweiten Drehstabes erstreckt, sowie eine Stange (52) aufweist, die sich zwischen den beiden Armen (48, 50) erstreckt und drehbar mit ihnen verbunden ist, und eine Kupplung, die an dem Fahrzeugrahmen (42) befestigt ist und drehbar an der Stange (52) befestigt ist.

6. System nach einem der vorhergehenden Ansprüche, dadurch gekennzeichnet, daß der erste und der zweite Drehstab (2; 16, 18) an ihren Enden drehfest miteinander verbunden sind.

7. System nach Anspruch 6, dadurch gekennzeichnet, daß der erste Drehstab (2) äußere Keilverbindungen an seinen Enden trägt, die mit inneren Keilverbindungen an den Enden des zweiten Drehstabes (16, 18) zusammenarbeiten.

## Revendications

1. Un système de suspension de véhicule composé d'un châssis (42), des premier et deuxième supports (46) de roue aux extrémités opposées du châssis (42) pour soutenir les roues respectives en vue d'un mouvement vertical par rapport au châssis (42), une première barre de torsion (2) ayant la forme générale d'un U qui s'étend à travers le châssi (42 et dont les bras (10) sont reliés à celui des supports de roue qui lui est respectif et une deuxième barre de torsion (16, 18) qui s'étend à travers le châssis et dont les extrémités sont reliées à celui des supports de roue qui lui est respectif, la deuxième barre de torsion étant divisée en deux parties (16, 18) qui sont reliées entre elles par un mécanisme de renversement du couple de torsion (20) par lequel un couple de torsion appliqué à une extrémité produit un couple de torsion de sens contraire à l'autre extrémité, caractérisé par le fait que la première barre de torsion (2) s'étend à l'intérieur de la deuxième barre de torsion (16, 18) coaxialement à cette dernière.

2. Un système selon la revendication 1, caractérisé par le fait que le mécanisme de renversement du couple de torsion (20) comprend des premier et deuxième engrenages (20, 30) disposés de façon à tourner avec une partie respective (16, 18) de la deuxième barre de torsion et un ou plusieurs engrenages intermédiaires (32, 34) reliant les premier et deuxième engrenages et disposés de manière à les faire tourner dans des directions opposées.

3. Un système selon la revendication 1, caractérisé par le fait que le mécanisme de renversement du couple de torsion comprend des premier et deuxième moyens à roue motrice disposés de manière à tourner avec la partie respective (16, 18) de la deuxième barre de torsion et situés dans les parties respectives d'un boîtier contenant un fluide hydraulique et ainsi disposé que la rotation d'une partie (16, 18) de la barre de torsion dans une direction entraîne le déplacement du fluide hydraulique et la rotation de l'autre partie (18, 16) de la barre de torsion dans la direction opposée.

4. Un système selon une des revendications 2 et 3, caractérisé par le fait que la première barre de torsion s'étend à travers le mécanisme de renversement du couple de torsion (20).

5. Un système selon la revendication 1, caractérisé par le fait que le mécanisme de renversement du couple de torsion (20) comprend un bras (48, 50) qui s'étend transversalement de l'extrémité intérieure de cette partie (16, 18) de la deuxième barre de torsion, une barre (52) s'étendant entre les deux bras (48, 50) et articulée à ces derniers et un accouplement fixé au cadre du véhicule (42) et articulée à la barre (52).

6. Un système selon une des revendications précédentes, caractérisé par le fait que les premières et deuxième barres de torsion (2; 16, 18) sont reliées solidement en rotation à leurs extrémités.

7. Un système selon la revendication 6, caractérisé par le fait que la première barre de torsion (2) porte des cannelures vers l'extérieur à ses extrémités, lesquelles coopèrent avec des cannelures vers l'intérieur aux extrémités de la deuxième barre de torsion (16, 18).
